(19) Europäisches Patentamt
European Patent Office
Office européen des brevets

(11) **EP 4 148 391 A1**

(12) **EUROPEAN PATENT APPLICATION**

(43) Date of publication:
**15.03.2023 Bulletin 2023/11**

(21) Application number: **22194561.1**

(22) Date of filing: **08.09.2022**

(51) International Patent Classification (IPC):
**G01C 21/34** (2006.01)   **G01W 1/00** (2006.01)

(52) Cooperative Patent Classification (CPC):
**G01C 21/3461; G01W 1/00**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.09.2021 US 202117469558**

(71) Applicant: **HERE Global B.V.
5611 ZT Eindhoven (NL)**

(72) Inventor: **RESNIK, Sergej
65284 Schwalbach am Taunus (DE)**

(74) Representative: **Cohausz & Florack
Patent- & Rechtsanwälte
Partnerschaftsgesellschaft mbB
Bleichstraße 14
40211 Düsseldorf (DE)**

(54) **METHOD AND APPARATUS FOR DISPERSING INCIDENT ROUTING**

(57)     An approach is provided for dispersing incident routing. For example, the approach involves determining an incident location of an incident. The incident disperses over a geographic area. The approach also involves generating a polygon representing the geographic area. The incident location is represented as one vertex of the polygon. The approach further involves computing a navigation route to or from the incident location, the geographic area, a vicinity of the geographic area, or a combination thereof based on a routing engine cost function. The routing engine cost function weighs a traversal through the geographic area represented by the polygon to generate the navigation route.

FIG. 1

**Description**

BACKGROUND

Incidents, such as an incident with airborne hazards, have significant impacts on driving conditions and safety. For instance, a massive fire caused by e.g. a collapsing bridge generates smoke, a chemical cloud, etc. and paralyzes traffic flow. The fire, the smoke, the chemical cloud, etc. can spread naturally. In addition, weather can disperse these hazards, making some paths towards/away from the incident site completely undrivable. Not only emergency vehicles need to respond to incidents without delay, but also other vehicles want to leave/avoid the incident sites, utilizing routes that are drivable and safe. Traffic reporting service providers (e.g., governmental providers, commercial providers, crowd-sourced providers, etc.) distribute traffic related data to users, optionally including weather data. The traffic related data comes from various sources, including crowd-souring from vehicles. For example, modern vehicles are capable of sensing and reporting road-related events such as traffic incidents, fire incidents, etc. as they travel throughout a road network. However, crowd-souring reporting depends on active reporting by drivers, passengers, and/or vehicles, which may not be available in some areas, such as forests, private properties, etc. Accordingly, service providers face significant technical challenges to route vehicles into or away from dispersing incident(s).

SOME EXAMPLE EMBODIMENTS

Therefore, there is need for an approach for routing vehicles into or away from dispersing incident(s) that affect driving conditions and safety, such as a fire, a smoke cloud, a chemical cloud, a demonstration, people leaving a concert, etc.

According to one embodiment, a computer-implemented method comprises determining an incident location of an incident. The incident disperses over a geographic area. The method also comprises generating a polygon representing the geographic area. The incident location is represented as one vertex of the polygon. The method further comprises computing a navigation route to or from the incident location, the geographic area, a vicinity of the geographic area, or a combination thereof based on a routing engine cost function. The routing engine cost function weighs a traversal through the geographic area represented by the polygon to generate the navigation route.

According to another embodiment, an apparatus comprises at least one processor, and at least one memory including computer program code for one or more programs, the at least one memory and the computer program code configured to, with the at least one processor, to cause, at least in part, the apparatus to determine an incident location of an incident. The incident disperses over a geographic area. The apparatus is also caused to generate a polygon representing the geographic area. The incident location is represented as one vertex of the polygon. The apparatus is further caused to compute a navigation route to or from the incident location, the geographic area, a vicinity of the geographic area, or a combination thereof based on a routing engine cost function. The routing engine cost function weighs a traversal through the geographic area represented by the polygon to generate the navigation route.

According to another embodiment, a computer-readable storage medium carrying one or more sequences of one or more instructions which, when executed by one or more processors, cause, at least in part, an apparatus to determine an incident location of an incident. The incident disperses over a geographic area. The apparatus is also caused to generate a polygon representing the geographic area. The incident location is represented as one vertex of the polygon. The apparatus is further caused to compute a navigation route to or from the incident location, the geographic area, a vicinity of the geographic area, or a combination thereof based on a routing engine cost function. The routing engine cost function weighs a traversal through the geographic area represented by the polygon to generate the navigation route.

According to another embodiment, an apparatus comprises means for determining an incident location of an incident. The incident disperses over a geographic area. The apparatus also comprises means for generating a polygon representing the geographic area. The incident location is represented as one vertex of the polygon. The apparatus further comprises means for computing a navigation route to or from the incident location, the geographic area, a vicinity of the geographic area, or a combination thereof based on a routing engine cost function. The routing engine cost function weighs a traversal through the geographic area represented by the polygon to generate the navigation route.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing the method of any of the claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

BRIEF DESCRIPTION OF THE DRAWINGS

The embodiments of the invention are illustrated by way of example, and not by way of limitation, in the figures of the accompanying drawings:

FIG. 1 is a diagram of a system capable of dispersing incident routing, according to one embodiment;

FIG. 2A are diagrams illustrating example dispersing incidents, according to various embodiments;

FIG. 2B is a diagram illustrating an example dispersing incident, according to one embodiment;

FIG. 2C is a diagram of an example machine learning data matrix, according to one embodiment;

FIG. 3 is a diagram of the components of a mapping platform that supports dispersing incident routing, according to one embodiment;

FIG. 4 is a flowchart of a process for dispersing incident routing, according to one embodiment;

FIGs. 5A-5B are diagrams of example map user interfaces associated with dispersing incident routing, according to various embodiments;

FIG. 6 is a diagram of a geographic database, according to one embodiment;

FIG. 7 is a diagram of hardware that can be used to implement an embodiment of the invention, according to one embodiment;

FIG. 8 is a diagram of a chip set that can be used to implement an embodiment of the invention, according to one embodiment; and

FIG. 9 is a diagram of a mobile terminal (e.g., handset or vehicle or part thereof) that can be used to implement an embodiment.

DESCRIPTION OF SOME EMBODIMENTS

Examples of a method, apparatus, and computer program for dispersing incident routing are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

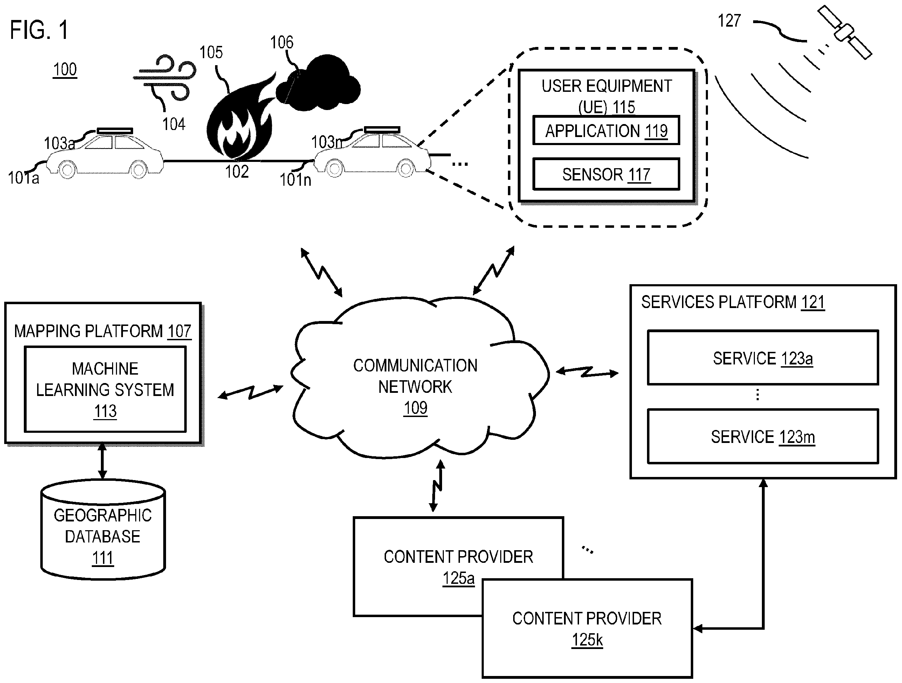

FIG. 1 is a diagram of a system capable of dispersing incident routing, according to one embodiment. Service providers and vehicle manufacturers are increasingly developing compelling navigation and other location-based services that improve the overall driving experience and safety by leveraging vehicle capabilities, such as autonomous driving, reporting road events using sensor data collected by connected vehicles as they travel, etc. For example, the vehicles can use their respective sensors to detect incidents, slippery road conditions, etc., which in turn can be used for issuing local hazard warning, updating real-time mapping data, as inputs to a mapping database.

However, crowd-souring reporting depends on active reporting by drivers, passengers, and/or vehicles. In addition, some areas may not have drivers, passengers, and/or vehicles available, such as forests, private properties, etc. Moreover, these real-time incident reports are static on specific road segments (e.g., fire, chemical cloud, etc.) without forward looking into the dispersing factors based on other factors, such as weather conditions. Weather conditions such as precipitation, high winds, extreme temperatures, etc. can affect the spread of fire, smoke cloud, chemical cloud, etc. There is lack of approaches for estimating incident dispersions based on different weather conditions, using parameters such as wind speed/direction, precipitation intensity/type, etc. There is neither a routing mechanism that considers a dispersing incident, such as a spreading fire.

To address these problems, the system 100 of FIG. 1 introduces a capability to provide for dispersing incident routing. In one embodiment, the system 100 can estimate how an incident disperses based on weather information (e.g., wind direction/speed), a location of the incident, etc. to create a dispersion polygon with one of the vertices of the polygon corresponding to the incident location and the dimensions of the polygon depending on the prevailing wind direction/speed. Once this polygon is created, the system 100 can increase traversal cost for road links on the map that overlap with the polygon ("penalization"), and route vehicles accordingly. For instance, the system 100 can route an emergency vehicle to the incident location considering the increased traversal cost (e.g., penalties), for example, using the fastest route so as to better contain the fire as well as save lives. When calculating the traversal cost, the system 100 can factor in the weather, the time of day, lighting, traffic speed and volume, road configuration, etc. that affect first responders (e.g., law enforcement officers, paramedics, emergency medical technicians (EMTs), firefighters, etc.) safety, travel time, estimated time of arrival, etc. along different roadways to the incident location. As another instance, the system 100 can route other vehicles away from the incident location and/or the polygon considering their own increased traversal cost (e.g., safer to stay away from the fire and the polygon). In one embodiment, the other vehicles' travel cost can factor in the impact on the emergency vehicle (e.g., less traffic for the emergency vehicle to reach the incident location), etc. For example, a fire truck and/or fire fighters can be fatally struck or severely injured, by a vehicle that lost visibility in a dense smoke. As another example, a fire truck can be blocked by vehicles fleeing away from the incident location and/or the polygon.

In one embodiment, when routing involves a private road network (e.g., in a corporation/school campus, an industrial park, a research center, a gated community, airport, etc.), the system 100 can incorporate routes connecting a private road network with a public road network via gateways into the private road network based on the above-described travel cost. A private facility can install sensors to detect dispersing incidents, such as the sensor networks/systems required by law in certain facilities. In one embodiment, the system 100 can consider public roads and private roads equally. In another embodiment, the system 100 can default to public roads and use private roads when the incident location is not reachable otherwise. When calculating travel cost of the private roads, the system 100 can factor in the cost of passing via gates, speedbumps, strictly controlled entrances, etc.

In addition to vehicles, the system 100 can also route pedestrians on foot, drone/aircraft routing (e.g., via city buildings vs forests), etc.

As shown FIG. 1, the system 100 comprises one or more vehicles 101a-101n (also collectively referred to as vehicles 101) respectively equipped with sensors 103a-103n (also collectively referred to as sensors 103) for sensing vehicle locations and events, and/or other characteristics (e.g., road conditions, weather conditions, etc.) on a road segment 102 of a transportation network (e.g., a road network) in which the vehicles 101 are traveling. For example, the system 100 can determine an incident 105 (e.g., a fire that blows fire smoke 106 toward a Y direction for a Z distance) on the on the road segment 102 within a time frame (that overlapped with a weather event 104, e.g., wind) based on sensor data of a vehicle 101 and/or data from one or more infrastructure sensors. For instance, vehicle location sensors can apply various positioning assisted navigation technologies, e.g., global navigation satellite systems (GNSS), WiFi, Bluetooth, Bluetooth low energy, 2/3/4/5/6G cellular signals, ultra-wideband (UWB) signals, etc., and various combinations of the technologies to derive vehicle and incident location data. In another embodiment, the system 100 can collect incident data from infrastructure sensors that may be configured to use any sensing technology (e.g., visible light camera sensors, Bluetooth, infrared sensors, Lidar sensors, radar sensors, acoustic sensors, and the like) to detect the incident(s), vehicle status, vehicle event(s), etc. In one embodiment, the infrastructure sensors may be used in combination with or in place of any of the vehicle sensors discussed with respect to the various embodiments described herein.

In yet another embodiment, the system 100 can query incident data from incident reporting databases (e.g., traffic incident feeds, traffic crash reports, police reports, etc. published by public authorities), traffic/weather incident reporting applications, etc. There are many different traffic incident definitions/classifications within the transportation community. By way of example, the Traffic Incident Management Handbook defines an incident as "any non-recurring event that causes a reduction of roadway capacity or an abnormal increase in demand." Under this definition, events such as traffic crashes, disabled vehicles, spilled cargo, highway maintenance and reconstruction projects, and special non-emergency events (e.g., ball games, concerts, or any other event that significantly affects roadway operations) are classified as an incident. The Traffic Management Data Dictionary (TMDD), as published by ITE and AASHTO, defines an incident as "an unplanned randomly occurring traffic event that adversely effects normal traffic operations." The 2000 Highway Capacity Manual defines an incident as being "any occurrence on a roadway that impedes normal traffic flow." In addition, traffic incident information reporting into service providers is not always in a machine-readable format, and much less in a standard incident reporting format, such as Alert C code, Transport Protocol Experts Group (TPEG) Traffic Event Compact (TEC) code, etc. Accordingly, the system 100 can consolidate traffic/weather incident information of different forms and formats for processing. With the incident location/timing/nature data, the system 100 can generate polygons for those incidents that will spread/disperse considering environmental (e.g., weather) condition(s). The system 100 may not require absolute certainty of a traffic/weather incident, but with a probability passing a threshold.

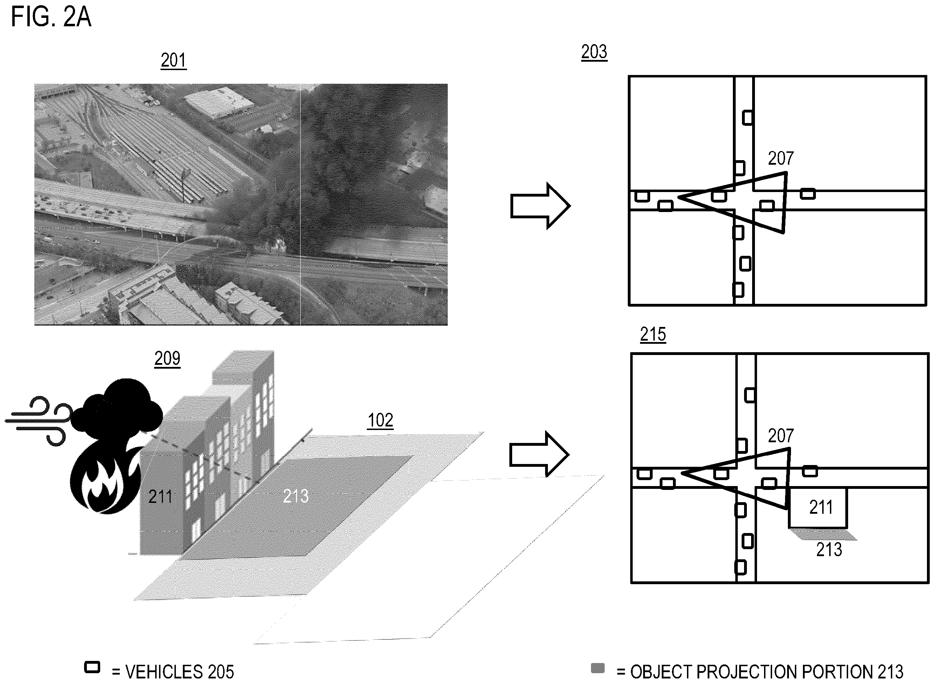

FIG. 2A are diagrams illustrating example dispersing incidents, according to various embodiments. FIG. 2A shows a street image 201 depicting a fire incident on a roadway with dispersing smoke during traffic hours.

In this embodiment, the system 100 can generate a diagram 203 showing vehicles 205 and a polygon 207 representing the dispersing fire/smoke incident. A direction and a size of the polygon can determined based on weather parameters (e.g., wind direction/speed), traffic parameters (e.g., peak hours), map object parameters (e.g., buildings), etc.

For instance, the system 100 can consider map objects (e.g., buildings, overpasses, etc.) nearby the road segment 102 with incident shielding effect(s) to calculate a delta/difference $\Delta$ contributed by such object(s) under weather condition(s) during a time frame. For instance, FIG. 2A shows a street diagram 209 depicting building(s) 211 that can block a portion 213 of a road segment from fire/smoke thus reducing the incident effect. The building(s) 211 can also block/shield the potion 213 from the wind that increases the fire/smoke effect. The system 100 can determine the portion 213 using map data (e.g., including three-dimensional (3D) model data of the building(s)), weather data (e.g., wind direction, strength, etc.), and 3D projection. In this embodiment, the system 100 can convert the building(s) 211 and the portion 213 in the street diagram 209 into a 2D map diagram 215 using 3D-2D conversion.

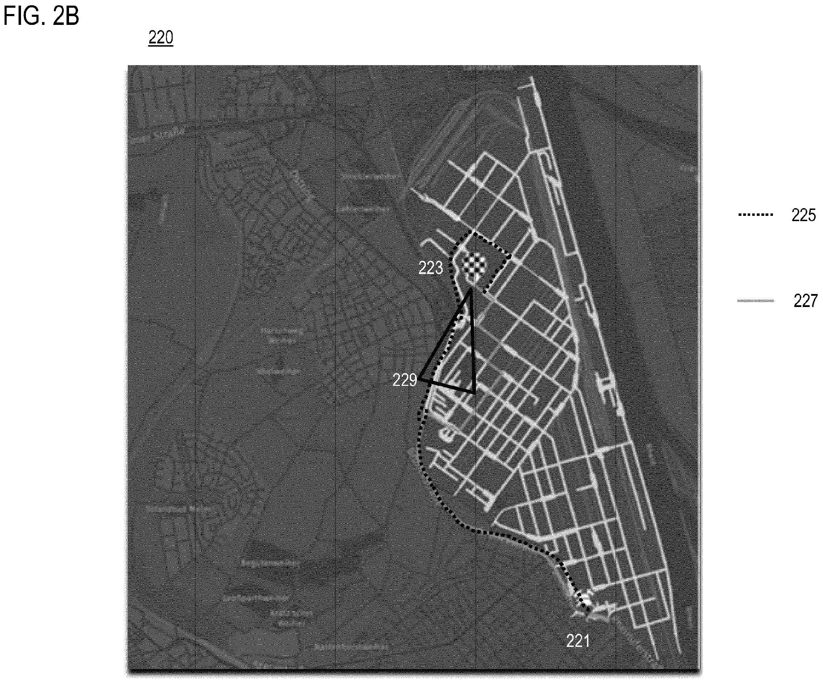

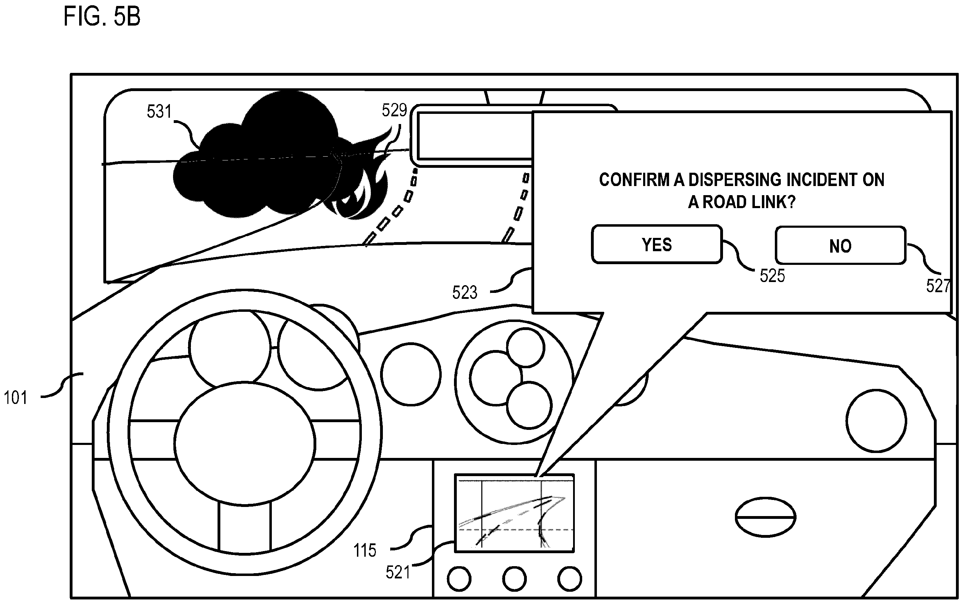

FIG. 2B is a diagram 220 illustrating an example dispersing incident, according to one embodiment. This example routing taking into account wind dispersion of an airborne hazard (e.g., a chemical cloud). Without the hazard, the system 100 can recommend a fastest route 225 (in a dot line) from a location 221 of an emergency vehicle to an incident location 223 in FIG. 2B. However, given the incident and wind characteristics, the emergency vehicle would be routed via a gray path 227 that circumvents a dispersing polygon 229 representing the airborne hazard incident. For instance, the dispersing polygon 229 can provide a projected path for the airborne hazard starting from the incident site and in direction of the prevailing wind. In FIG. 2B, the polygon 229 can be a 2D triangle since it is the simplest (e.g., most effective) shape applying the method. In another embodiment, the polygon 229 can be a 3D cone (e.g., a 3D cone 231 in FIG. 5B) that depicts the three-dimensional dispersion of the airborne hazard. For instance, the system 100 can use the 3D cone to route aerial vehicles, such as helicopters, drones, etc.

In one embodiment, the size of the polygon 229 can depend on the intensity of the incident and/or the prevailing wind speed. The wind information, both speed and direction, can be entered either manually or via a weather service application programming interface (API). In another embodiment, the system 100 can use predicted wind patterns to forecast how winds change while the incident progresses, which affects the dimensions and orientation of the polygon 229. For instance, incident and/or airborne hazard intensity may be provided as a rating (e.g. 1-5), as a more direct measurement of the incident (e.g. liters per second, cubic meters per second, etc.), etc. Other polygon shapes than tringles can be used to cover different dispersion patterns, such as ovals, logarithmic horn, etc.

In one embedment, the polygon 229 can include a gradient component to reflect intensity of the incident and/or airborne hazard. Typically, the higher intensity would be concentrated around the incident site with the effect decreasing as a function of a distance therefrom. In another embodiment, the gradient can have the highest intensity uniformly along a bisecting line of the polygon, e.g., which starts at the vertex corresponding to the incident site. The intensity fades from the bisecting line towards the outer edges of the polygon. In yet another embodiment, the polygon 229 can be a combination of both of the gradients, e.g., the bisecting line has the highest intensity at the incident site then fades towards the end of the bisecting line, and the intensity fades from the bisecting line towards the outer edges of the polygon.

The system 100 can then overlay the polygon 229 on a road network, and apply a penalty value to the traversal cost of road links within the polygon 229. When the polygon is "solid", i.e., without a gradient, road link penalties can be assigned uniformly, while a gradient would indicate decreasing penalties as a function of distance from the incident site. The penalties can be made available to a routing engine, which can then generate route(s) using known algorithms (e.g., Djikstra, A*, etc.). The system 100 can thus generate a safe route for emergency vehicle(s) attending the emergency and/or other vehicle(s) for safe evacuation.

In addition to wind snow, rain, sun, the system 100 can apply the about-discussed embodiments to other weather events such as snow, rain, sun, sleet, slush, ice, fog, etc. that can impact incident dispersion. The majority of weather-related crashes happen on wet pavement and during rainfall. A smaller percentage of weather-related crashes occur during winter conditions: during snow or sleet, occur on icy pavement, and on snowy or slushy pavement. Only a small percentage happen in the presence of fog.

In one embodiment, the system 100 can quantify incident dispersion using incident dispersing parameters such as air temperature and humidity, wind speed, precipitation (type, rate, start/end times), map object dimensions/materials/surfaces, etc., and calculate a delta/difference $\Delta$ of one or more of the incident dispersing parameter(s) contributed by map object(s) (e.g., buildings, hills, etc.) under weather event(s) during a time frame.

For instance, wind speed can increase fire/smoke spreading, etc. As another instance, precipitation can put off fire, impact smoke spreading, etc. As another instance, buildings can block fire/smoke/wind, etc. Referring back to the diagram 209 of FIG. 2A, the system 100 can consider a fire/smoke dispersing difference $\Delta$WIND attributed to the wind speed parameter. Concurrently or alternatively, the system 100 can calculate a fire/smoke penetrating difference $\Delta$BUILDING between the road segment 102 and the portion 213, such that the adjusted incident dispersion can be refined to ∆WIND - ∆BLTILDING. Concurrently or alternatively, the system 100 can further consider a rain difference ∆RAIN attributed to rain interaction with the fire/smoke, such that the adjusted incident dispersion between the road segment 102 and the portion 213 is refined to ∆WIND - ∆BUILDING - ∆RAIN.

In one embodiment, the system 100 can collect weather data via sensors 103 of the vehicle 101 and/or other sources (e.g., weather database(s) of private and/or public entities), analyze the weather data for incident dispersion difference data per road link, and store the incident dispersion difference data in a database (e.g., a geographic database). In addition, the sensors 103 of the vehicle 101 can report incident location data to a mapping platform 107 via a communication network 109. The mapping platform 107 can generate an optimal route for a coming vehicle 101 to minimize incident effects) based on incident dispersion difference data from the database (e.g., a geographic database 111), and alert/prepare passenger(s), for example, for potential incident event(s) en route based on the incident dispersion difference data, etc.. By way of example, the optimal route can be determined by any navigation routing engine known in the art with respect to incident location(s) and/or polygon(s) as shown in FIGs. 2A-2B.

In one embodiment, the mapping platform 107 can include a machine learning system 113 for analyzing incident data, weather data, map object data, etc. and extract incident dispersion difference data associated with road links. The extracted data can be stored in a database (e.g., the geographic database 111).

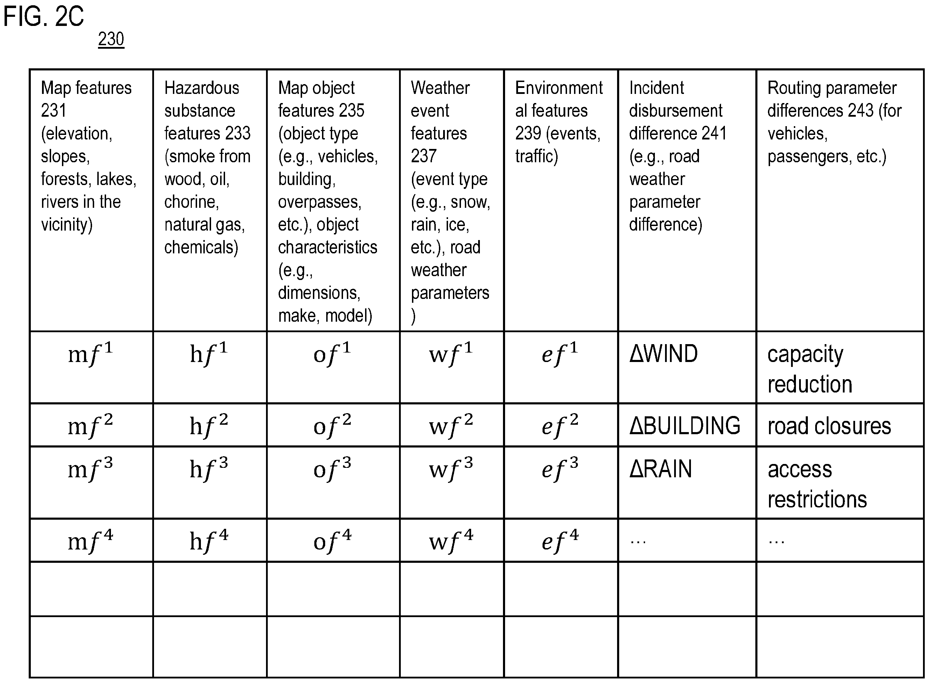

FIG. 2C is a diagram of an example machine learning data matrix, according to one embodiment. In one embodiment, the matrix/table 230 can further include input features such as map feature(s) 231 (e.g., elevation, slopes, forests, lakes, rivers in the vicinity, road link/segment features (e.g., width, pavement materials, marking, numbering, convex, sloped, flat, etc.), etc.), hazardous substance features 233 (e.g., smoke from wood, oil, chorine, natural gas, chemicals, etc.), , map object feature(s) 235 (e.g., object type (e.g., vehicles, building, overpasses, etc.), object characteristics (e.g., dimensions, make, model, etc.), etc.), weather event features 237 (e.g., event type (e.g., snow, rain, ice, etc.), road weather parameters (e.g., such as intensity of wind, buildings, rain, etc.), environment features 239 (e.g., events, traffic, traffic light status, construction status, etc.), in order to generate output features such as incident dispersion difference(s) for different roads (e.g., weather parameter difference(s), such as ∆WIND, ∆BLTILDING, ∆RAIN, etc.) 241, and routing parameter difference(s) (of vehicles, passengers, etc.) (e.g., capacity reduction, road closures, access restrictions, etc.) 243. For instance, capacity reductions can be caused by road closure due to fire/smoke. Road closures and access restrictions due to hazardous conditions (e.g., a chemical cloud) also decrease roadway capacity.

By way of example, the matrix/table 230 can list relationships among features and training data. For instance, notation

$$\llbracket mf \rrbracket ^\wedge i$$

can indicate the *ith* set of map features,

$$\llbracket hf \rrbracket ^\wedge i$$

can indicate the *ith* set of hazardous substance features,

$$\llbracket of \rrbracket ^\wedge i$$

can indicate the *ith* set of map object features,

$$\llbracket wf \rrbracket ^\wedge i$$

can indicate the *ith* set of weather events,

$$\llbracket ef \rrbracket ^\wedge i$$

can indicate the *ith* set of environmental features, etc.

In one embodiment, the training data can include ground truth data taken from historical incident dispersion data and/or historical incident dispersion difference data. For instance, the ground truth data can be taken via visual inspection, computer vision, aerial images, field sensors, etc.

By way of example, weather and incident sensors can be installed in roadways to detect real-time weather conditions (e.g., wind, dry, wet, ice-watch, chemically wet, etc.) and incident conditions (e.g., fire/smoke, chemical cloud, etc.). For instance, rain gauges and precipitation sensors are widely deployed to detect precipitation types (e.g., liquid phase: rain and drizzle and dew, solid phase: snow, ice crystals, ice pellets (sleet), hail, and graupel, transition between liquid/solid phases), amount of precipitation, precipitation intensity, etc. The respective precipitation intensities can be classified by rate of fall, by visibility restriction, etc.

In another embodiment, the vehicles 101 can be equipped with pavement inspection unit(s) and/or sensor(s) to detect road conditions (e.g., slippery/parked road conditions), environmental conditions (e.g., weather, lighting, etc.), vehicle telemetry data (e.g., speed, heading, acceleration, lateral acceleration, braking force, wheel speed, etc.), and/or other characteristics, to facilitate above-discussed embodiments.

In one embodiment, in a data mining process, features are mapped to ground truth incident dispersion difference(s) caused by weather event(s) and the presence of map object(s) such as buildings, billboards, overpasses, etc. to form a training instance. A plurality of training instances can form the training data for a machine learning model for determine incident dispersion and/or incident dispersion differences using one or more machine learning algorithms, such as random forest, decision trees, etc. For instance, the training data can be split into a training set and a test set, e.g., at a ratio of 23%:30%. After evaluating several machine learning models based on the training set and the test set, the machine learning model that produces the highest classification accuracy in training and testing can be used as the machine learning model for determining incident dispersions and/or incident dispersion differences. In addition, feature selection techniques, such as chi-squared statistic, information gain, gini index, etc., can be used to determine the highest ranked features from the set based on the feature's contribution to classification effectiveness.

In other embodiments, ground truth incident dispersion difference data can be more specialized than what is prescribed in the matrix/table 230. In the absence of one or more sets of the features 231-239, the model can still make a prediction using the available features.

In one embodiment, the incident dispersion/difference machine learning model can learn from one or more feedback loops. For example, when an incident dispersion difference is computed/estimated to be very high on a road link yet no incident is dispersed thereto, the incident dispersion/difference machine learning model can learn from the feedback data, via analyzing and reflecting how the high incident dispersion difference was generated. The incident dispersion/difference machine learning model can learn the cause(s), for example, based on the hazardous substance(s), the building dimensions, etc., and include new features into the model based on this learning.

By analogy, a routing machine learning model that can determine routing parameter differences 243 and route the vehicle 101 and/or the passenger(s) prior to entering the road segment and/or the polygon, based on the incident dispersion/difference data, and the routing machine learning model can be trained in a similar way. In one embodiment, the machine learning system 113 selects respective features 231-241 determine the optimal routing parameter differences 243 (e.g., capacity reduction, road closures, access restrictions, etc.), and then determine an optimal action(s) (e.g., route(s), re-route, etc.) to be taken by the vehicle 101, the passenger(s), etc. based on the routing parameter differences 243.

In other embodiments, the machine learning system 113 can train the incident dispersion/difference machine learning model and/or the trajectory machine learning model to select or assign respective weights, correlations, relationships, etc. among the features 231-243, to determine optimal action(s) to take for different incident dispersion difference scenarios on different road links/lanes. In one instance, the machine learning system 113 can continuously provide and/or update the machine learning models (e.g., a support vector machine (SVM), neural network, decision tree, etc.) during training using, for instance, supervised deep convolution networks or equivalents. In other words, the machine learning system 113 trains the machine learning models using the respective weights of the features to most efficiently select optimal action(s) to take for different incident dispersion difference scenarios on different road links.

In another embodiment, the machine learning system 113 of the mapping platform 107 includes a neural network or other machine learning system(s) to update enhanced features on roads/lanes. In one embodiment, the neural network of the machine learning system 113 is a traditional convolutional neural network which consists of multiple layers of collections of one or more neurons (which are configured to process a portion of an input data). In one embodiment, the machine learning system 113 also has connectivity or access over the communication network 109 to the geographic database 111 that can each store map data, weather data, the feature data, the training data, etc.

In one embodiment, the machine learning system 113 can improve the machine learning models using feedback loops based on, for example, vehicle behavior data and/or feedback data (e.g., from passengers). In one embodiment, the machine learning system 113 can improve the machine learning models using the vehicle behavior data and/or feedback data as training data. For example, the machine learning system 113 can analyze correctly identified incident dispersion difference data, trajectory data, and/or action data, missed incident dispersion difference data, trajectory data, and/or action data, etc. to determine the performance of the machine learning models.

In another embodiment, the system 100 can build a machine learning model only one of the road weather parameters. Alternatively, the system 100 can apply the incident dispersion/difference machine learning model to only one of the road weather parameters. By way of example, when a strong wind is reported for the road segment, the system 100 can use the incident dispersion/difference machine learning model to determine a route to expose to less wind thereby minimizing the impact of the fire/smoke. As another example, when the intensity of rain is in mm/hr and reported for the road segment, the system 100 can use the incident dispersion/difference machine learning model to determine a route to expose to more rain thereby minimizing the impact of the fire/smoke.

The difference/delta parameters (e.g., ΔWIND, ΔBUILDING, ΔRAIN, etc.) are adjustment factors to account for incident impacts. They can be directly determined based on historical incident dispersion difference data. Alternatively, the difference/delta parameters (e.g., ΔWIND, ΔBLTILDING, ΔRAIN, etc.) can be predicted/estimated using the above-described machine learning models trained with the historical incident dispersion difference data per lane/road. As discussed, individual machine learning models could be used for one road weather parameter, or a single machine learning model can handle multiple road weather parameters and produces one or more outputs of incident dispersion differences contributed by the road weather parameters. Given the predicted ΔWIND, ΔBUILDING, ΔRAIN, etc., the system 100 can provide aggregated incident dispersion(s) for routing vehicle(s).

The above-discussed embodiments can be applied to increase travel safety in any roads/lanes including motorways, train tracks, airplane runways, etc. to send hazardous warnings (e.g., fire/smoke, chemical/radioactive cloud, avalanche, tsunami, a stampeding crowd, mud slide, volcano lava, etc.), and/or recommend actions to mitigate incident dispersion impacts of weather events at a lane/road level, considering map objects with weather effect, such as buildings, billboards, overpasses, hills, mountains, etc.

Therefore, the system 100 can model the dispersion of dispersing incident(s), such as an air-born hazard event, then map to road links for routing by penalizing the links within the polygon, yet still drivable for emergency cars and other vehicles, instead of the prior art blocking.

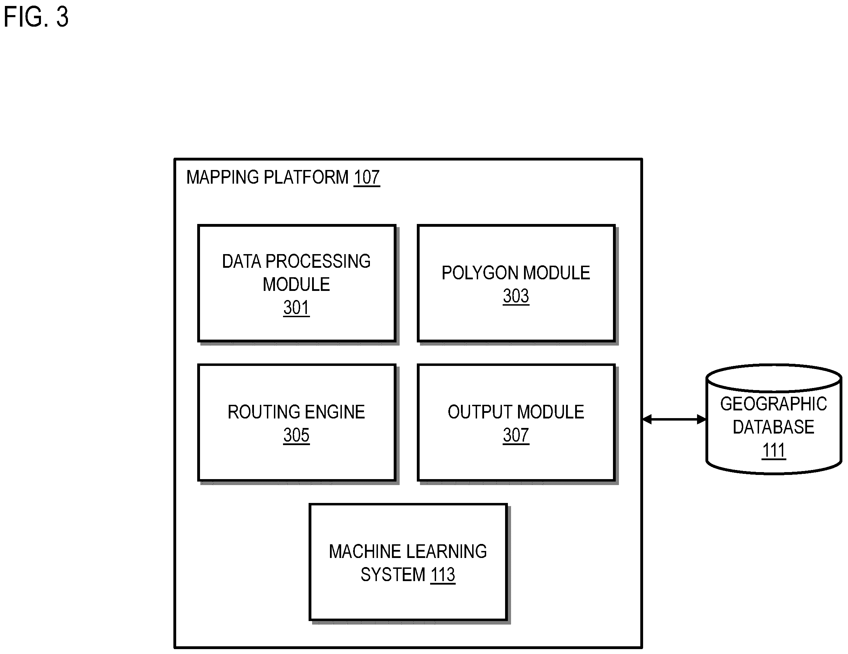

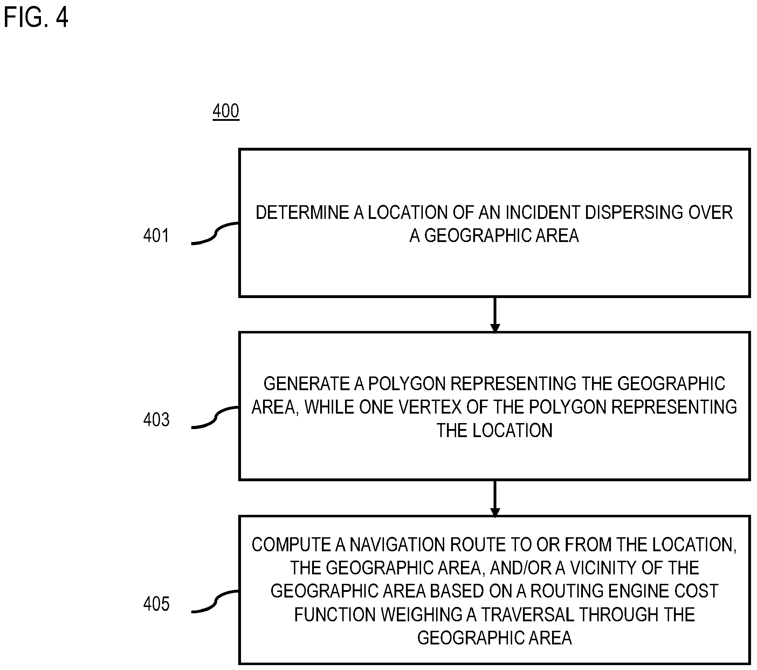

FIG. 3 is a diagram of the components of a mapping platform capable of dispersing incident routing, according to one embodiment. By way of example, the mapping platform 107 includes one or more components for providing a confidence-based road event message according to the various embodiments described herein. It is contemplated that the functions of these components may be combined or performed by other components of equivalent functionality. In this embodiment, the mapping platform 107 includes a data processing module 301, a polygon module 303, a routing engine 305, an output module 307, and the machine learning system 113. The above presented modules and components of the mapping platform 107 can be implemented in hardware, firmware, software, or a combination thereof. Though depicted as a separate entity in FIG. 1, it is contemplated that the mapping platform 107 may be implemented as a module of any of the components of the system 100 (e.g., a component of the vehicle 101, services platform 121, services 123, a client terminal, etc.). In another embodiment, one or more of the modules 301-307 and the machine learning system 113 may be implemented as a cloud based service, local service, native application, or combination thereof. The functions of the mapping platform 107, the modules 301-307, and the machine learning system 113 are discussed with respect to FIGs. 4-5 below.

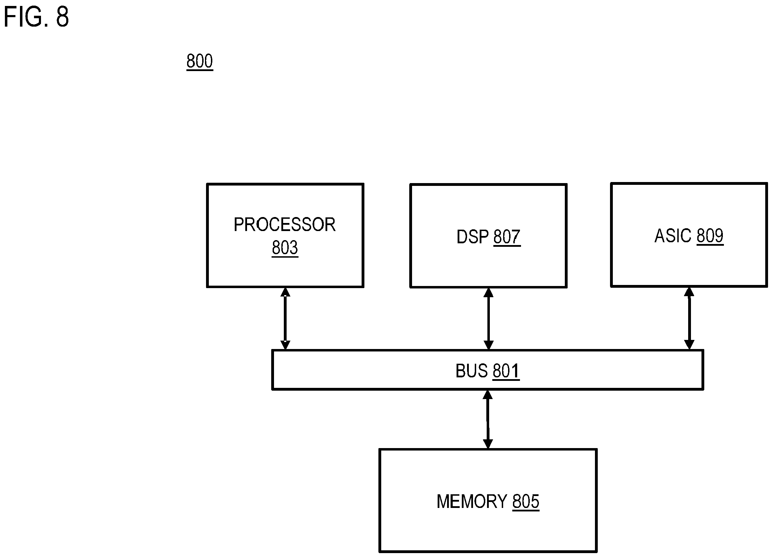

FIG. 4 is a flowchart of a process for dispersing incident routing, according to one embodiment. In various embodiments, the mapping platform 107, the machine learning system 113, and/or any of the modules 301-307 may perform one or more portions of the process 400 and may be implemented in, for instance, a chip set including a processor and a memory as shown in FIG. 8. As such, the mapping platform 107, the machine learning system 113, and/or the modules 301-307 can provide means for accomplishing various parts of the process 400, as well as means for accomplishing embodiments of other processes described herein in conjunction with other components of the system 100. Although the process 400 is illustrated and described as a sequence of steps, its contemplated that various embodiments of the process 400 may be performed in any order or combination and need not include all the illustrated steps.

In one embodiment, the data processing module 301 can retrieve weather data (e.g., from weather database(s) of private and/or public entities), incident dispersion data (e.g., form the geographic database 111), map data (e.g., from road database(s) of private and/or public entities, one or more mapping services, map databases, the geographic database 111, etc.), and/or vehicle sensor data for later processing.

In one embodiment, for example, in step 401, the data processing module 301 can determine an incident location of an incident (e.g., the incident location 223 in FIG. 2B). The incident disperses over a geographic area. The incident can be a hazard with a direction component that can be overlaid into a mapping system and the overlaid area is where to be penalized for routing using some sort of cost function. By way of example, the incident is an airborne hazard dispersion incident (e.g., a chemical cloud). As another example, the incident can be a demonstration where the demonstrators are moving from one location to another location dispersing through streets in a certain direction that vehicles/pedestrians want to avoid, or the incident can be people leaving a concert/theater/ballpark or other event area that congest roads through a dispersion pattern.

In one embodiment, an incident location can be detected using one or more sensors (e.g., vehicle sensors 103). For instance, the vehicle sensor data can also include weather data and/or incident dispersion data detected by sensors 103 (e.g., camera sensors, light sensors, LiDAR sensors, radar, infrared sensors, thermal sensors, etc.) of the vehicles 101 when travelling in a road network. In one embodiment, each vehicle 101 is configured to report weather data and/or incident dispersion data as road-link map attributes, which are individual data records collected at a point in time when the vehicle 101 is travelling on the road link. In another embodiment, the data processing module 301 can query data from incident reporting databases for the road segment 102 during a time period of a weather condition (e.g., wind).

In one embodiment, in step 403, the polygon module 303 can generate a polygon (e.g., the polygon 229 in FIG. 2B) representing the geographic area. The incident location is represented as one vertex of the polygon. By way of example, the polygon can be a triangle, an oval, a logarithmic horn, or a combination thereof that has vertices. For shapes without vertices (e.g., circles), the polygon module 303 can locate the incident site on the circumference.

A triangle is the simplest shape with one of the vertices as the incident site. As the wind moves around, the polygon module 303 can shift the triangle longer based on the wind intensity. In comparison, chemicals are heavier and do not fly as far as forest fire smoke. The polygon module 303 can apply different shapes for different kinds of hazards (e.g., forest fire, chemical leak, house fire, etc.) using the machine leaning system 113 as discussed. The polygon module 303 can apply multiple polygons representing different hazards (e.g., overlapping polygons of smoke and chemicals) that come out from the same incident cite or different incident sites that diverge (e.g., smoke goes one direction and the chemicals go a different direction) with different hazard levels (e.g., dangerous, very dangerous, etc.)

In one embodiment, the polygon is a two-dimensional polygon (e.g., the polygon 207 in FIG. 2A). In another embodiment, the polygon is a three-dimensional polygon (e.g., the polygon 229 in FIG. 2B) that represents the incident as a three-dimensional dispersion incident, and the navigation route can be a three-dimensional route to or from the incident location, the geographic area, a vicinity of the geographic area, or a combination thereof. By way of example, the three-dimensional route can be an aerial route.

In one embodiment, in step 405, the routing engine 305 can computing a navigation route (e.g., the lowest cost route 227 in FIG. 2B) to or from the incident location, the geographic area, a vicinity of the geographic area, or a combination thereof based on a routing engine cost function. The routing engine cost function can weigh a traversal through the geographic area represented by the polygon to generate the navigation route. In one embodiment, such weighing is to avoid an area (e.g., covered by fire/smoke).

In another embodiment, such weighing is to approach an area, e.g., to route to be within the polygon. In this case, positive routing values instead of penalties can increase the routing engine cost function to traverse those links of the "plus" (favored/incentivized) area. For example, when a waterspout is jetting into air or rain, and the routing engine 305 can route vehicles/pedestrians within the zone in which the water/rain disperses to avoid heat or fire. As another example, the routing engine 305 can route vehicles/pedestrians to approach a location under covers of a smoke screen or the like. As another example, the routing engine 305 can route vehicles/pedestrians to chase tornados/storms, etc.

In one embodiment, the polygon module 303 can determine one or more map features of geographic database (e.g., any map feature represented in the geographic database such as road links, pedestrian paths, buildings, etc.) that overlap with the polygon, and the routing engine cost function can increase or decrease a traversal cost associated with the one or more map features to weigh the traversal through the geographic area represented by the polygon.

In one embodiment, the polygon module 303 can determine one or more weather parameters (e.g., wind speed/direction, rain amount, etc.) associated with the incident location, the geographic area, or a combination thereof, and determine a direction, a size, or a combination thereof of the polygon based on the one or more weather parameters. By way of example, the one or more weather parameters can include a wind direction, a wind speed, or a combination thereof. The polygon module 303 can add airborne events with a wind component that carries the hazard to at least estimate the affected area to overlay onto a map for routing purposes.

In another embodiment, the polygon module 303 can determine one or more changes to the one or more weather parameters over a duration of the incident, and dynamically update the polygon based on the one or more changes.

In one embodiment, the polygon module 303 can determine a size of the polygon based on an intensity of the incident. For instance, fire intensity defines the energy released from the fire or characteristics of the fire behavior such as flame length and rate of spread. In terms of smoke, Carbon Dioxide ($CO_2$) and water vapor make up the majority of the mass emitted, while the rest contains problem compounds such as Carbon Monoxide, Particulate Matter, Hydrocarbons and other organic compounds. The more intense the fire, the more complete the combustion process and a bigger percent of the smoke will be carbon dioxide and water vapor. As such, the smoke intensity can be measured based on the intensity of $CO_2$ and/or the problem compounds. In terms of a chemical/radioactive cloud, the incident intensity can be defined by the chemical/radioactive material intensity. In terms of demonstration or other events, the incident intensity can be measured based on the people density in the crowd.

In one embodiment, the polygon module 303 can determine a gradient component of the polygon, and the gradient component can represent an intensity gradient of the incident with respect to proximity to the incident location. In this case, the routing engine cost function can further weight the traversal through the geographic area represented by the polygon based on the gradient component.

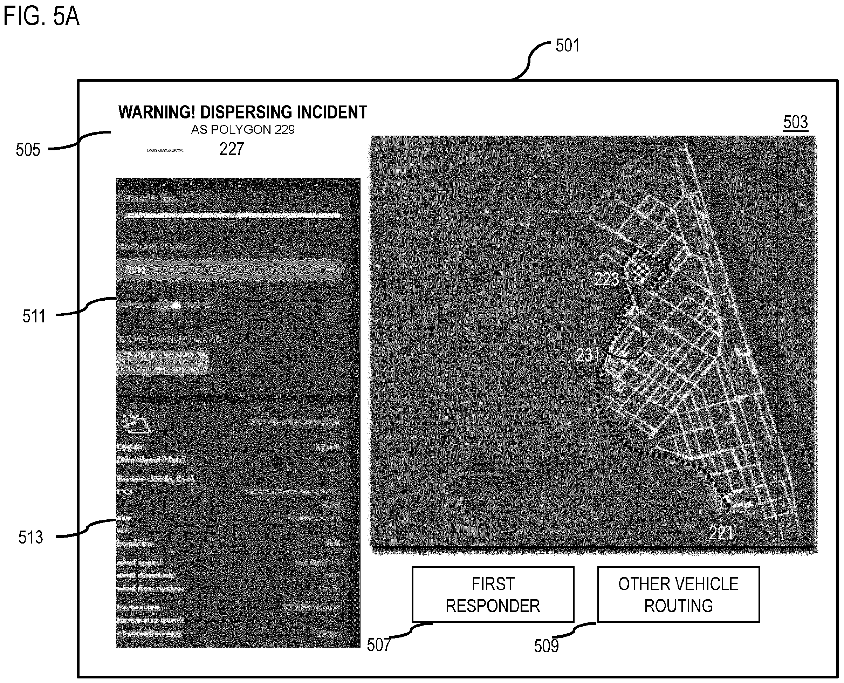

In one embodiment, the output module 307 can generate a map user interface depicting a representation of the polygon, the navigation route, or a combination thereof, and present the map user interface on a device (e.g., the UE 115). For instance, the map user interface can depict live image(s), live feed of video, animations, real-time renderings of data, etc. of the polygon as the wind moves around (e.g., depending on weather data update rate), warning of the incident site and/or the polygon, danger level(s), how close to the incident site as drive via, etc. for first responders, wildfire control, urban planner (fire evacuation), etc. The map user interface can depict how to get to the incident site, plan designated evacuation routes to avoid hotspots and fires (e.g., 100% safe to pass area vs 80%), etc. FIGs. 5A-5B are diagrams of example map user interfaces associated with dispersing incident routing, according to example embodiment(s).

In another embodiment, the routing engine 305 can determine vehicle routing based on the incident dispersion adjusted based on update sensor data, weather data, etc., and the output module 307 can update the vehicle routing accordingly.

In yet another embodiment, the output module 307 working in conjunction with the polygon module 303 can generate an incident map layer based at least on the incident location data, update sensor data, weather data, etc., to support vehicle navigation, first responders, road maintenance, wildfire control, urban planner (fire evacuation), etc.

Referring to FIG. 5A, in one embodiment, the system 100 can generate a user interface (UI) 501 (e.g., via the mapping platform 107) for a UE 115 (e.g., a mobile device, a smartphone, a client terminal, etc.) that can allow a user (e.g., a mapping service provider staff, a first responder, a road service provider staff, a city planner, an end user, etc.) to see dispersing incidents (e.g., the hazardous event in FIG. 2B) currently and/or over time (e.g., a second, a minute, an hour, a day, a week, a month, a year, etc.) in an area presented over a map 503.

In one embodiment, the UI 501 may allow a vehicle operator or passenger to manually mark/tag a dispersing incident on the map 503. In another embodiment, the UI 501 also allow the vehicle operator/passenger to enter an incident type (e.g., fire, smoke, chemical cloud, etc.), the relevant intensity (e.g., on a predefined scale, an absolute value (such as Liters per second, $m^3$ per minute, etc.), etc. Once receiving information, the system 100 can apply wind values (e.g., speed, heading, etc.) to derive a size of the polygon and its orientation.

In this case, the system 100 presents a notification 505 of "Warning! Dispersing incident as Polygon 229." The system 100 can prompt the user to select a "First Responder" button 507 or a "Other vehicle routing" button 509 in response to the notification 505. Accordingly, when the user selects the First Responder" button 507, the system 100 can present the lowest cost route 227 based on penalized road link costs to ensure the first responder will reach the incident site safely and timely as discussed above.

The UI 501 may also present a display control panel 511 and a weather panel 513 in FIG. 5A. The display control panel 511 allows the user (1) to adjust a to adjust a zoom level per km, (2) to simulate a wind direction, (3) to adjust the route routing engine cost function between the shortest and the fastest, (4) to block uploading road segments, etc. The weather panel 513 shows the weather conditions associated with the dispersing incident: temperature, sky, air, humidity, wind speed/direction, barometer reading/trend/observation age, etc.

In one instance, the UI 501 could also be presented via a headset, goggle, or eyeglass device used separately or in connection with a UE 115 (e.g., a mobile device). In one embodiment, the system 100 can present or surface the incident/routing information, map data, traffic report data, etc. in multiple interfaces simultaneously (e.g., presenting a 2D map, a 3D map, an augmented reality view, a virtual reality display, or a combination thereof). In one embodiment, the system 100 could also present the incident/routing information to the user through other media including but not limited to one or more sounds, haptic feedback, touch, or other sensory interfaces. For example, the system 100 could present the incident/routing information through the speakers of a vehicle 101.

In FIG. 5B, the system 100 may provide interactive user interfaces (e.g., of UE 115 associated with the vehicle 101) for reporting incident location(s) within navigation applications (e.g., Waze®). In one scenario, a user interface (UI) 521 of the vehicle 101 depicts a navigation diagram, and prompts the user with a popup 523: "Confirm a dispersing incident on a road link?", after (1) the system 100 receives a dispersing incident report, and/or (2) the vehicle 101 detects a dispersing incident (e.g., based on vehicle sensor data) An operator and/or a passenger of the vehicle 101 can select a "yes" button 525 or a "no" button 527 based on the user's observation of a fire 529 and smoke 531 on a road segment. Alternatively, a dispersing incident en route can be manually input by a vehicle operator and/or passenger as described with respect to FIG. 5A.

For example, the user interface can present the UI 521 and/or a physical controller such as but not limited to an interface that enables voice commands, a pressure sensor on a screen or window whose intensity reflects the movement of time, an interface that enables gestures/touch interaction, a knob, a joystick, a rollerball or trackball-based interface, or other sensors. As other examples, the sensors can be any type of sensor that can detect a user's gaze, heartrate, sweat rate or perspiration level, eye movement, body movement, or combination thereof, in order to determine a user response to confirm road events. As such, the system 100 can enable a user to confirm snow-free lanes as training data for the machine learning model to train as discussed.

In one embodiment, the vehicles 101 are autonomous vehicles or highly assisted driving vehicles that can sense their environments and navigate within a travel network without driver or occupant input. It is contemplated the vehicle 101 may be any type of transportation wherein a driver is in control of the vehicle's operation (e.g., an airplane, a drone, a train, a ferry, etc.). In one embodiment, the vehicle sensors 103 (e.g., camera sensors, light sensors, LiDAR sensors, radar, infrared sensors, thermal sensors, and the like) acquire map data and/or sensor data during operation of the vehicle 101 within the travel network for routing, historical trajectory data collection, and/or destination prediction.

In one embodiment, one or more user equipment (UE) 115 can be associated with the vehicles 101 (e.g., an embedded navigation system) a person or thing traveling within the travel network. By way of example, the UEs 115 can be any type of mobile terminal, fixed terminal, or portable terminal including a mobile handset, station, unit, device, multimedia computer, multimedia tablet, Internet node, communicator, desktop computer, laptop computer, notebook computer, netbook computer, tablet computer, personal communication system (PCS) device, personal navigation device, personal digital assistants (PDAs), audio/video player, digital camera/camcorder, positioning device, fitness device, television receiver, radio broadcast receiver, electronic book device, game device, devices associated with one or more vehicles or any combination thereof, including the accessories and peripherals of these devices, or any combination thereof. It is also contemplated that the UEs 115 can support any type of interface to the user (such as "wearable" circuitry, etc.). In one embodiment, the vehicles 101 may have cellular or wireless fidelity (Wi-Fi) connection either through the inbuilt communication equipment or from the UEs 115 associated with the vehicles 101. Also, the UEs 115 may be configured to access the communication network 109 by way of any known or still developing communication protocols.

In one embodiment, the UEs 115 include a user interface element configured to receive a user input (e.g., a knob, a joystick, a rollerball or trackball-based interface, a touch screen, etc.). In one embodiment, the user interface element could also include a pressure sensor on a screen or a window (e.g., a windshield of a vehicle 101, a heads-up display, etc.), an interface element that enables gestures/touch interaction by a user, an interface element that enables voice commands by a user, or a combination thereof. In one embodiment, the UEs 115 may be configured with various sensors 117 for collecting passenger sensor data and/or context data during operation of the vehicle 101 along one or more roads within the travel network. By way of example, the sensors 117 are any type of sensor that can detect a passenger's gaze, heartrate, sweat rate or perspiration level, eye movement, body movement, or combination thereof, in order to determine a passenger context or a response to output data. In one embodiment, the UEs 115 may be installed with various applications 119 to support the system 100.

In one embodiment, the mapping platform 107 has connectivity over the communication network 109 to the services platform 121 that provides the services 123. By way of example, the services 123 may also be other third-party services and include mapping services, navigation services, travel planning services, notification services, social networking services, content (e.g., audio, video, images, etc.) provisioning services, application services, storage services, contextual information determination services, location-based services, information-based services (e.g., weather, news, etc.), etc.

In one embodiment, the content providers 125 may provide content or data (e.g., including geographic data, output data, historical trajectory data, etc.). The content provided may be any type of content, such as map content, output data, audio content, video content, image content, etc. In one embodiment, the content providers 125 may also store content associated with the weather event/road link correlation data, the geographic database 111, mapping platform 107, services platform 121, services 123, and/or vehicles 101. In another embodiment, the content providers 125 may manage access to a central repository of data, and offer a consistent, standard interface to data, such as a repository of weather event/road link correlation data and/or the geographic database 111.

By way of example, as previously stated the vehicle sensors 103 may be any type of sensor. In certain embodiments, the vehicle sensors 103 may include, for example, a global positioning sensor for gathering location data, a network detection sensor for detecting wireless signals or receivers for different short-range communications (e.g., Bluetooth, Wi-Fi, Li-Fi, near field communication (NFC) etc.), temporal information sensors, a camera/imaging sensor for gathering image data (e.g., for detecting objects proximate to the vehicle 101), an audio recorder for gathering audio data (e.g., detecting nearby humans or animals via acoustic signatures such as voices or animal noises), velocity sensors, and the like. In another embodiment, the vehicle sensors 103 may include sensors (such as LiDAR, Radar, Ultrasonic, Infrared, cameras (e.g., for visual ranging), etc. mounted along a perimeter of the vehicle 101) to detect the relative distance of the vehicle 101 from lanes or roadways, the presence of other vehicles, pedestrians, animals, traffic lights, road features (e.g., curves) and any other objects, or a combination thereof. In one scenario, the vehicle sensors 103 may detect weather data, traffic information, or a combination thereof. In one example embodiment, the vehicles 101 may include GPS receivers to obtain geographic coordinates from satellites 127 for determining current location and time. Further, the location can be determined by a triangulation system such as A-GPS, Cell of Origin, or other location extrapolation technologies when cellular or network signals are available. In another example embodiment, the one or more vehicle sensors 103 may provide in-vehicle navigation services.

The communication network 109 of system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, 5G networks, code division multiple access (CDMA), wideband code division multiple access (WCDMA), wireless fidelity (Wi-Fi), wireless LAN (WLAN), Bluetooth®, Internet Protocol (IP) data casting, satellite, mobile ad-hoc network (MANET), and the like, or any combination thereof.

In one embodiment, the mapping platform 107 may be a platform with multiple interconnected components. By way of example, the mapping platform 107 may include multiple servers, intelligent networking devices, computing devices, components, and corresponding software for determining upcoming vehicle events for one or more locations based, at least in part, on signage information. In addition, it is noted that the mapping platform 107 may be a separate entity of the system 100, a part of the services platform 121, the one or more services 123, or the content providers 125.

By way of example, the vehicles 101, the UEs 115, the mapping platform 107, the services platform 121, and the content providers 125 communicate with each other and other components of the communication network 109 using well known, new or still developing protocols. In this context, a protocol includes a set of rules defining how the network nodes within the communication network 109 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a datalink (layer 2) header, an internetwork (layer 3) header and a transport (layer 4) header, and various application (layer 5, layer 6 and layer 7) headers as defined by the OSI Reference Model.

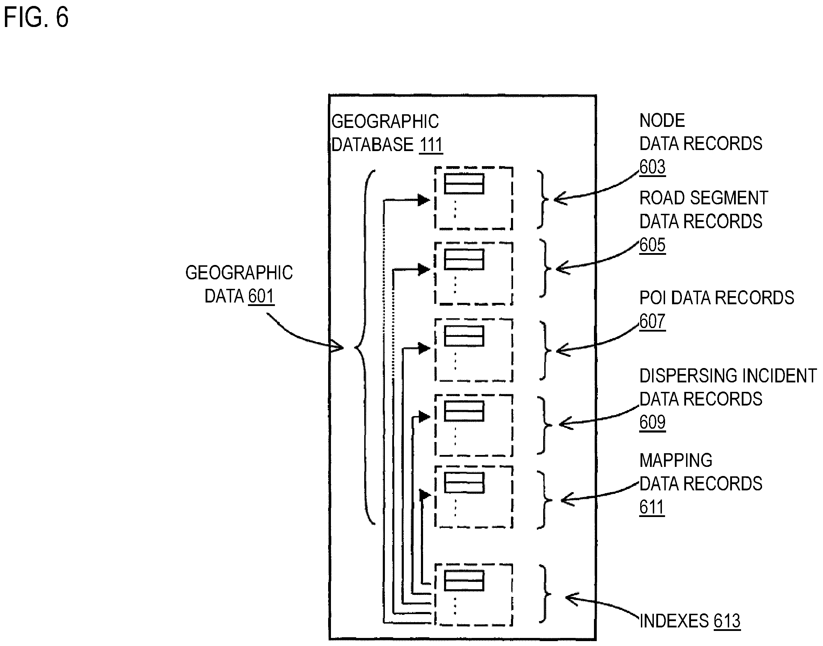

FIG. 6 is a diagram of a geographic database (such as the database 111), according to one embodiment. In one embodiment, the geographic database 111 includes geographic data 601 used for (or configured to be compiled to be used for) mapping and/or navigation-related services, such as for video odometry based on the parametric representation of lanes include, e.g., encoding and/or decoding parametric representations into lane lines. In one embodiment, the geographic database 111 include high resolution or high definition (HD) mapping data that provide centimeter-level or better accuracy of map features. For example, the geographic database 111 can be based on Light Detection and Ranging (LiDAR) or equivalent technology to collect very large numbers of 3D points depending on the context (e.g., a single street/scene, a country, etc.) and model road surfaces and other map features down to the number lanes and their widths. In one embodiment, the mapping data (e.g., mapping data records 611) capture and store details such as the slope and curvature of the road, lane markings, roadside objects such as signposts, including what the signage denotes. By way of example, the mapping data enable highly automated vehicles to precisely localize themselves on the road.

In one embodiment, geographic features (e.g., two-dimensional or three-dimensional features) are represented using polygons (e.g., two-dimensional features) or polygon extrusions (e.g., three-dimensional features). For example, the edges of the polygons correspond to the boundaries or edges of the respective geographic feature. In the case of a building, a two-dimensional polygon can be used to represent a footprint of the building, and a three-dimensional polygon extrusion can be used to represent the three-dimensional surfaces of the building. It is contemplated that although various embodiments are discussed with respect to two-dimensional polygons, it is contemplated that the embodiments are also applicable to three-dimensional polygon extrusions. Accordingly, the terms polygons and polygon extrusions as used herein can be used interchangeably.

In one embodiment, the following terminology applies to the representation of geographic features in the geographic database 111.

"Node" - A point that terminates a link.

"Line segment" - A straight line connecting two points.

"Link" (or "edge") - A contiguous, non-branching string of one or more line segments terminating in a node at each end.

"Shape point" - A point along a link between two nodes (e.g., used to alter a shape of the link without defining new nodes).

"Oriented link" - A link that has a starting node (referred to as the "reference node") and an ending node (referred to as the "non reference node").

"Simple polygon" - An interior area of an outer boundary formed by a string of oriented links that begins and ends in one node. In one embodiment, a simple polygon does not cross itself.

"Polygon" - An area bounded by an outer boundary and none or at least one interior boundary (e.g., a hole or island). In one embodiment, a polygon is constructed from one outer simple polygon and none or at least one inner simple polygon. A polygon is simple if it just consists of one simple polygon, or complex if it has at least one inner simple polygon.

In one embodiment, the geographic database 111 follows certain conventions. For example, links do not cross themselves and do not cross each other except at a node. Also, there are no duplicated shape points, nodes, or links. Two links that connect each other have a common node. In the geographic database 111, overlapping geographic features are represented by overlapping polygons. When polygons overlap, the boundary of one polygon crosses the boundary of the other polygon. In the geographic database 111, the location at which the boundary of one polygon intersects they boundary of another polygon is represented by a node. In one embodiment, a node may be used to represent other locations along the boundary of a polygon than a location at which the boundary of the polygon intersects the boundary of another polygon. In one embodiment, a shape point is not used to represent a point at which the boundary of a polygon intersects the boundary of another polygon.

As shown, the geographic database 111 includes node data records 603, road segment or link data records 605, POI data records 607, dispersing incident data records 609, mapping data records 611, and indexes 613, for example. More, fewer or different data records can be provided. In one embodiment, additional data records (not shown) can include cartographic ("carto") data records, routing data, and maneuver data. In one embodiment, the indexes 613 may improve the speed of data retrieval operations in the geographic database 111. In one embodiment, the indexes 613 may be used to quickly locate data without having to search every row in the geographic database 111 every time it is accessed. For example, in one embodiment, the indexes 613 can be a spatial index of the polygon points associated with stored feature polygons.

In exemplary embodiments, the road segment data records 605 are links or segments representing roads, streets, or paths, as can be used in the calculated route or recorded route information for determination of one or more personalized routes. The node data records 603 are end points (such as intersections) corresponding to the respective links or segments of the road segment data records 605. The road link data records 605 and the node data records 603 represent a road network, such as used by vehicles, cars, and/or other entities. Alternatively, the geographic database 111 can contain path segment and node data records or other data that represent pedestrian paths or areas in addition to or instead of the vehicle road record data, for example.

The road/link segments and nodes can be associated with attributes, such as geographic coordinates, street names, address ranges, speed limits, turn restrictions at intersections, and other navigation related attributes, as well as POIs, such as gasoline stations, hotels, restaurants, museums, stadiums, offices, automobile dealerships, auto repair shops, buildings, stores, parks, etc. The geographic database 111 can include data about the POIs and their respective locations in the POI data records 607. The geographic database 111 can also include data about places, such as cities, towns, or other communities, and other geographic features, such as bodies of water, mountain ranges, etc. Such place or feature data can be part of the POI data records 607 or can be associated with POIs or POI data records 607 (such as a data point used for displaying or representing a position of a city). In one embodiment, certain attributes, such as lane marking data records, mapping data records and/or other attributes can be features or layers associated with the link-node structure of the database.

In one embodiment, the geographic database 111 can also include dispersing incident data records 609 for storing dispersing incident location data, incident dispersion difference data, machine learning models on incident dispersion (e.g., including the matrix/table 230 in FIG. 2C), training data, prediction models, annotated observations, computed featured distributions, sampling probabilities, and/or any other data generated or used by the system 100 according to the various embodiments described herein. By way of example, the dispersing incident data records 609 can be associated with one or more of the node records 603, road segment records 605, and/or POI data records 607 to support localization or visual odometry based on the features stored therein and the corresponding estimated quality of the features. In this way, the records 609 can also be associated with or used to classify the characteristics or metadata of the corresponding records 603, 605, and/or 607.

In one embodiment, as discussed above, the mapping data records 611 model road surfaces and other map features to centimeter-level or better accuracy. The mapping data records 611 also include lane models that provide the precise lane geometry with lane boundaries, as well as rich attributes of the lane models. These rich attributes include, but are not limited to, lane traversal information, lane types, lane marking types, lane level speed limit information, and/or the like. In one embodiment, the mapping data records 611 are divided into spatial partitions of varying sizes to provide mapping data to vehicles 101 and other end user devices with near real-time speed without overloading the available resources of the vehicles 101 and/or devices (e.g., computational, memory, bandwidth, etc. resources).

In one embodiment, the mapping data records 611 are created from high-resolution 3D mesh or point-cloud data generated, for instance, from LiDAR-equipped vehicles. The 3D mesh or point-cloud data are processed to create 3D representations of a street or geographic environment at centimeter-level accuracy for storage in the mapping data records 611.

In one embodiment, the mapping data records 611 also include real-time sensor data collected from probe vehicles in the field. The real-time sensor data, for instance, integrates real-time traffic information, weather, and road conditions (e.g., potholes, road friction, road wear, etc.) with highly detailed 3D representations of street and geographic features to provide precise real-time also at centimeter-level accuracy. Other sensor data can include vehicle telemetry or operational data such as windshield wiper activation state, braking state, steering angle, accelerator position, and/or the like.

In one embodiment, the geographic database 111 can be maintained by the content provider 121 in association with the services platform 121 (e.g., a map developer). The map developer can collect geographic data to generate and enhance the geographic database 111. There can be different ways used by the map developer to collect data. These ways can include obtaining data from other sources, such as municipalities or respective geographic authorities. In addition, the map developer can employ field personnel to travel by vehicle (e.g., vehicles 101 and/or UEs 115) along roads throughout the geographic region to observe features and/or record information about them, for example. Also, remote sensing, such as aerial or satellite photography, can be used.

The geographic database 111 can be a master geographic database stored in a format that facilitates updating, maintenance, and development. For example, the master geographic database or data in the master geographic database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data is compiled (such as into a platform specification format (PSF) format) to organize and/or configure the data for performing navigation-related functions and/or services, such as route calculation, route guidance, map display, speed calculation, distance and travel time functions, and other functions, by a navigation device, such as by a vehicle 101 or a UE 115, for example. The navigation-related functions can correspond to vehicle navigation, pedestrian navigation, or other types of navigation. The compilation to produce the end user databases can be performed by a party or entity separate from the map developer. For example, a customer of the map developer, such as a navigation device developer or other end user device developer, can perform compilation on a received geographic database in a delivery format to produce one or more compiled navigation databases.

The processes described herein for dispersing incident routing may be advantageously implemented via software, hardware (e.g., general processor, Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below.

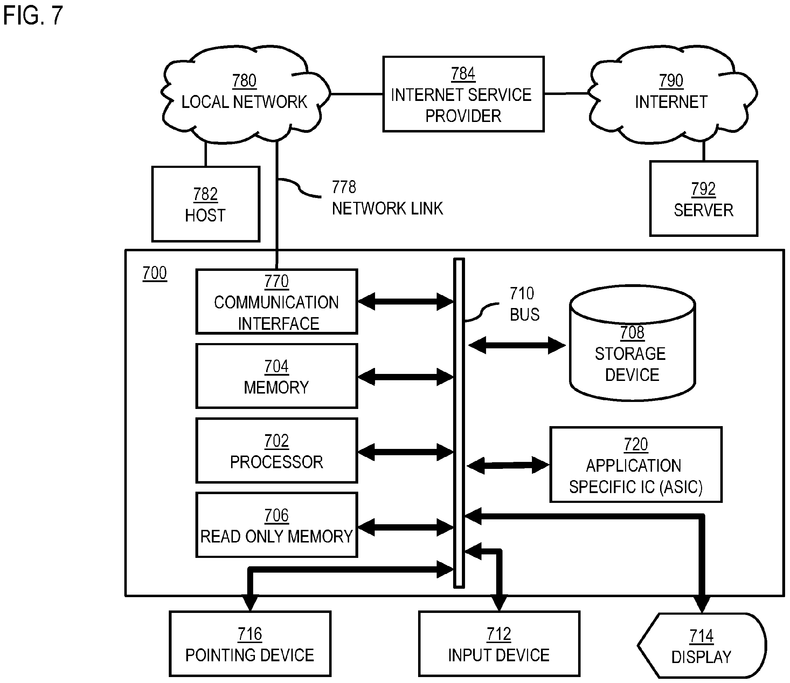

FIG. 7 illustrates a computer system 700 upon which an embodiment of the invention may be implemented. Computer system 700 is programmed (e.g., via computer program code or instructions) to disperse incident routing as described herein and includes a communication mechanism such as a bus 710 for passing information between other internal and external components of the computer system 700. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 710 includes one or more parallel conductors of information so that information is transferred quickly among devices coupled to the bus 710. One or more processors 702 for processing information are coupled with the bus 710.

A processor 702 performs a set of operations on information as specified by computer program code related to dispersing incident routing. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 710 and placing information on the bus 710. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 702, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 700 also includes a memory 704 coupled to bus 710. The memory 704, such as a random access memory (RAM) or other dynamic storage device, stores information including processor instructions for dispersing incident routing. Dynamic memory allows information stored therein to be changed by the computer system 700. RAM allows a unit of information stored at a location called a memory address to be stored and retrieved independently of information at neighboring addresses. The memory 704 is also used by the processor 702 to store temporary values during execution of processor instructions. The computer system 700 also includes a read only memory (ROM) 706 or other static storage device coupled to the bus 710 for storing static information, including instructions, that is not changed by the computer system 700. Some memory is composed of volatile storage that loses the information stored thereon when power is lost. Also coupled to bus 710 is a nonvolatile (persistent) storage device 708, such as a magnetic disk, optical disk or flash card, for storing information, including instructions, that persists even when the computer system 700 is turned off or otherwise loses power.

Information, including instructions for dispersing incident routing, is provided to the bus 710 for use by the processor from an external input device 712, such as a keyboard containing alphanumeric keys operated by a human user, or a sensor. A sensor detects conditions in its vicinity and transforms those detections into physical expression compatible with the measurable phenomenon used to represent information in computer system 700. Other external devices coupled to bus 710, used primarily for interacting with humans, include a display device 714, such as a cathode ray tube (CRT) or a liquid crystal display (LCD), or plasma screen or printer for presenting text or images, and a pointing device 716, such as a mouse or a trackball or cursor direction keys, or motion sensor, for controlling a position of a small cursor image presented on the display 714 and issuing commands associated with graphical elements presented on the display 714. In some embodiments, for example, in embodiments in which the computer system 700 performs all functions automatically without human input, one or more of external input device 712, display device 714 and pointing device 716 is omitted.

In the illustrated embodiment, special purpose hardware, such as an application specific integrated circuit (ASIC) 720, is coupled to bus 710. The special purpose hardware is configured to perform operations not performed by processor 702 quickly enough for special purposes. Examples of application specific ICs include graphics accelerator cards for generating images for display 714, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 700 also includes one or more instances of a communications interface 770 coupled to bus 710. Communication interface 770 provides a one-way or two-way communication coupling to a variety of external devices that operate with their own processors, such as printers, scanners and external disks. In general the coupling is with a network link 778 that is connected to a local network 780 to which a variety of external devices with their own processors are connected. For example, communication interface 770 may be a parallel port or a serial port or a universal serial bus (USB) port on a personal computer. In some embodiments, communications interface 770 is an integrated services digital network (ISDN) card or a digital subscriber line (DSL) card or a telephone modem that provides an information communication connection to a corresponding type of telephone line. In some embodiments, a communication interface 770 is a cable modem that converts signals on bus 710 into signals for a communication connection over a coaxial cable or into optical signals for a communication connection over a fiber optic cable. As another example, communications interface 770 may be a local area network (LAN) card to provide a data communication connection to a compatible LAN, such as Ethernet. Wireless links may also be implemented. For wireless links, the communications interface 770 sends or receives or both sends and receives electrical, acoustic or electromagnetic signals, including infrared and optical signals, that carry information streams, such as digital data. For example, in wireless handheld devices, such as mobile telephones like cell phones, the communications interface 770 includes a radio band electromagnetic transmitter and receiver called a radio transceiver. In certain embodiments, the communications interface 770 enables connection to the communication network 109 for dispersing incident routing.

The term computer-readable medium is used herein to refer to any medium that participates in providing information to processor 702, including instructions for execution. Such a medium may take many forms, including, but not limited to, non-volatile media, media and transmission media. Non-volatile media include, for example, optical or magnetic disks, such as storage device 708. Volatile media include, for example, dynamic memory 704. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

Network link 778 typically provides information communication using transmission media through one or more networks to other devices that use or process the information. For example, network link 778 may provide a connection through local network 780 to a host computer 782 or to equipment 784 operated by an Internet Service Provider (ISP). ISP equipment 784 in turn provides data communication services through the public, world-wide packet-switching communication network of networks now commonly referred to as the Internet 790.

A computer called a server host 792 connected to the Internet hosts a process that provides a service in response to information received over the Internet. For example, server host 792 hosts a process that provides information representing video data for presentation at display 714. It is contemplated that the components of system can be deployed in various configurations within other computer systems, e.g., host 782 and server 792.

FIG. 8 illustrates a chip set 800 upon which an embodiment of the invention may be implemented. Chip set 800 is programmed to disperse incident routing as described herein and includes, for instance, the processor and memory components described with respect to FIG. 7 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 800 includes a communication mechanism such as a bus 801 for passing information among the components of the chip set 800. A processor 803 has connectivity to the bus 801 to execute instructions and process information stored in, for example, a memory 805. The processor 803 may include one or more processing cores with each core configured to perform independently. A multi-core processor enables multiprocessing within a single physical package. Examples of a multi-core processor include two, four, eight, or greater numbers of processing cores. Alternatively or in addition, the processor 803 may include one or more microprocessors configured in tandem via the bus 801 to enable independent execution of instructions, pipelining, and multithreading. The processor 803 may also be accompanied with one or more specialized components to perform certain processing functions and tasks such as one or more digital signal processors (DSP) 807, or one or more application-specific integrated circuits (ASIC) 809. A DSP 807 typically is configured to process real-world signals (e.g., sound) in real time independently of the processor 803. Similarly, an ASIC 809 can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 803 and accompanying components have connectivity to the memory 805 via the bus 801. The memory 805 includes both dynamic memory (e.g., RAM, magnetic disk, writable optical disk, etc.) and static memory (e.g., ROM, CD-ROM, etc.) for storing executable instructions that when executed perform the inventive steps described herein to disperse incident routing. The memory 805 also stores the data associated with or generated by the execution of the inventive steps.

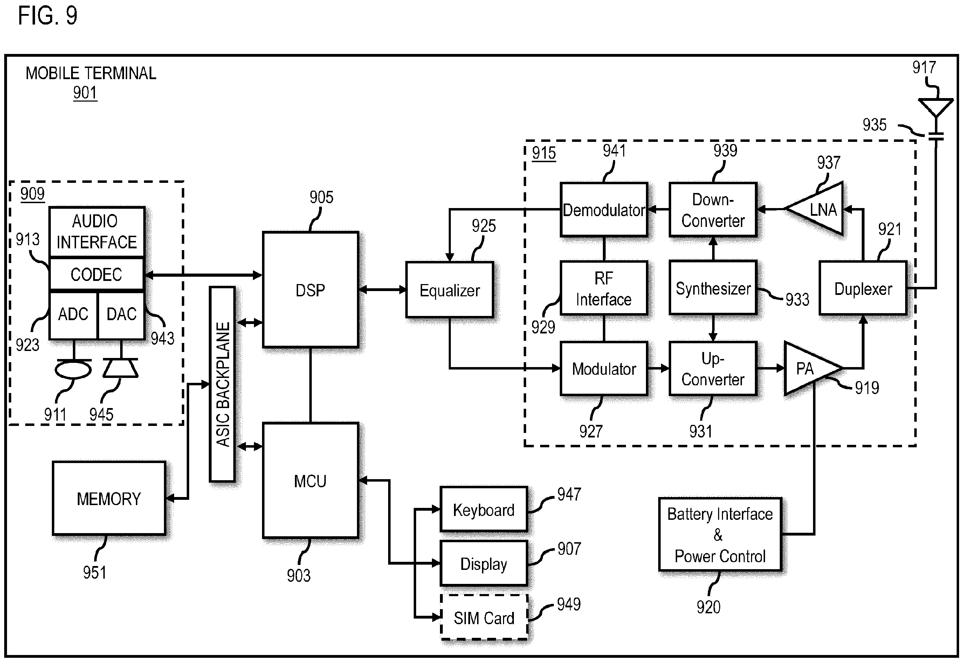

FIG. 9 is a diagram of exemplary components of a mobile terminal 901 (e.g., handset or vehicle or part thereof) capable of operating in the system of FIG. 1, according to one embodiment. Generally, a radio receiver is often defined in terms of front-end and back-end characteristics. The front-end of the receiver encompasses all of the Radio Frequency (RF) circuitry whereas the back-end encompasses all of the base-band processing circuitry. Pertinent internal components of the telephone include a Main Control Unit (MCU) 903, a Digital Signal Processor (DSP) 905, and a receiver/transmitter unit including a microphone gain control unit and a speaker gain control unit. A main display unit 907 provides a display to the user in support of various applications and mobile station functions that offer automatic contact matching. An audio function circuitry 909 includes a microphone 911 and microphone amplifier that amplifies the speech signal output from the microphone 911. The amplified speech signal output from the microphone 911 is fed to a coder/decoder (CODEC) 913.

A radio section 915 amplifies power and converts frequency in order to communicate with a base station, which is included in a mobile communication system, via antenna 917. The power amplifier (PA) 919 and the transmitter/modulation circuitry are operationally responsive to the MCU 903, with an output from the PA 919 coupled to the duplexer 921 or circulator or antenna switch, as known in the art. The PA 919 also couples to a battery interface and power control unit 920.

In use, a user of mobile station 901 speaks into the microphone 911 and his or her voice along with any detected background noise is converted into an analog voltage. The analog voltage is then converted into a digital signal through the Analog to Digital Converter (ADC) 923. The control unit 903 routes the digital signal into the DSP 905 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wireless fidelity (WiFi), satellite, and the like.

The encoded signals are then routed to an equalizer 925 for compensation of any frequency-dependent impairments that occur during transmission though the air such as phase and amplitude distortion. After equalizing the bit stream, the modulator 927 combines the signal with a RF signal generated in the RF interface 929. The modulator 927 generates a sine wave by way of frequency or phase modulation. In order to prepare the signal for transmission, an up-converter 931 combines the sine wave output from the modulator 927 with another sine wave generated by a synthesizer 933 to achieve the desired frequency of transmission. The signal is then sent through a PA 919 to increase the signal to an appropriate power level. In practical systems, the PA 919 acts as a variable gain amplifier whose gain is controlled by the DSP 905 from information received from a network base station. The signal is then filtered within the duplexer 921 and optionally sent to an antenna coupler 935 to match impedances to provide maximum power transfer. Finally, the signal is transmitted via antenna 917 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile station 901 are received via antenna 917 and immediately amplified by a low noise amplifier (LNA) 937. A down-converter 939 lowers the carrier frequency while the demodulator 941 strips away the RF leaving only a digital bit stream. The signal then goes through the equalizer 925 and is processed by the DSP 905. A Digital to Analog Converter (DAC) 943 converts the signal and the resulting output is transmitted to the user through the speaker 945, all under control of a Main Control Unit (MCU) 903- which can be implemented as a Central Processing Unit (CPU) (not shown).

The MCU 903 receives various signals including input signals from the keyboard 947. The keyboard 947 and/or the MCU 903 in combination with other user input components (e.g., the microphone 911) comprise a user interface circuitry for managing user input. The MCU 903 runs a user interface software to facilitate user control of at least some functions of the mobile station 901 to disperse incident routing. The MCU 903 also delivers a display command and a switch command to the display 907 and to the speech output switching controller, respectively. Further, the MCU 903 exchanges information with the DSP 905 and can access an optionally incorporated SIM card 949 and a memory 951. In addition, the MCU 903 executes various control functions required of the station. The DSP 905 may, depending upon the implementation, perform any of a variety of conventional digital processing functions on the voice signals. Additionally, DSP 905 determines the background noise level of the local environment from the signals detected by microphone 911 and sets the gain of microphone 911 to a level selected to compensate for the natural tendency of the user of the mobile station 901.

The CODEC 913 includes the ADC 923 and DAC 943. The memory 951 stores various data including call incoming tone data and is capable of storing other data including music data received via, e.g., the global Internet. The software module could reside in RAM memory, flash memory, registers, or any other form of writable computer-readable storage medium known in the art including non-transitory computer-readable storage medium. For example, the memory device 951 may be, but not limited to, a single memory, CD, DVD, ROM, RAM, EEPROM, optical storage, or any other non-volatile or non-transitory storage medium capable of storing digital data.

An optionally incorporated SIM card 949 carries, for instance, important information, such as the cellular phone number, the carrier supplying service, subscription details, and security information. The SIM card 949 serves primarily to identify the mobile station 901 on a radio network. The card 949 also contains a memory for storing a personal telephone number registry, text messages, and user specific mobile station settings.

Furthermore, the following exemplary embodiments of the invention are disclosed:

Exemplary embodiment 1. A method comprising:

determining an incident location of an incident, wherein the incident disperses over a geographic area;
generating a polygon representing the geographic area, wherein the incident location is represented as one vertex of the polygon; and computing a navigation route to or from the incident location, the geographic area, a vicinity of the geographic area, or a combination thereof based on a routing engine cost function, wherein the routing engine cost function weighs a traversal through the geographic area represented by the polygon to generate the navigation route.

Exemplary embodiment 2. The method of embodiment 1, further comprising: determining one or more map features of a geographic database that overlap with the polygon, wherein the routing engine cost function increases or decreases a traversal cost associated with the one or more map features to weigh the traversal through the geographic area represented by the polygon.

Exemplary embodiment 3. The method of embodiment 1, wherein the incident is an airborne hazard dispersion incident.

Exemplary embodiment 4. The method of embodiment 3, further comprising: determining one or more weather parameters associated with the incident location, the geographic area, or a combination thereof,

wherein a direction, a size, or a combination thereof of the polygon is determined based on the one or more weather parameters.

Exemplary embodiment 5. The method of embodiment 4, wherein the one or more weather parameters include a wind direction, a wind speed, or a combination thereof.

Exemplary embodiment 6. The method of embodiment 3, further comprising: determining one or more changes to the one or more weather parameters over a duration of the incident; and dynamically updating the polygon based on the one or more changes.

Exemplary embodiment 7. The method of embodiment 1, further comprising: determining a size of the polygon based on an intensity of the incident.

Exemplary embodiment 8. The method of embodiment 1, further comprising: determining a gradient component of the polygon,

wherein the gradient component represents an intensity gradient of the incident with respect to proximity to the incident location.

Exemplary embodiment 9. The method of embodiment 8, wherein the routing engine cost function further weights the traversal through the geographic area represented by the polygon based on the gradient component.

Exemplary embodiment 10. The method of embodiment 1, further comprising: generating a map user interface depicting a representation of the polygon, the navigation route, or a combination thereof; and presenting the map user interface on a device.

Exemplary embodiment 11. The method of embodiment 1, wherein the polygon is a triangle, an oval, a logarithmic horn, or a combination thereof.

Exemplary embodiment 12. An apparatus comprising:

at least one processor; and
at least one memory including computer program code for one or more programs,
the at least one memory and the computer program code configured to, with the at least one processor, cause the apparatus to perform at least the following,
determine an incident location of an incident, wherein the incident disperses over a geographic area;
generate a polygon representing the geographic area, wherein the incident location is represented as one vertex of the polygon; and
compute a navigation route to or from the incident location, the geographic area, a vicinity of the geographic area, or a combination thereof based on a routing engine cost function,
wherein the routing engine cost function weighs a traversal through the geographic area represented by the polygon to generate the navigation route.

Exemplary embodiment 13. The apparatus of embodiment 12, wherein the apparatus is further caused to:
determine one or more map features of a geographic database that overlap with the polygon, wherein the routing engine cost function increases or decreases a traversal cost associated with the one or more map features to weigh the traversal through the geographic area represented by the polygon.

Exemplary embodiment 14. The apparatus of embodiment 12, wherein the incident is an airborne hazard dispersion incident.

Exemplary embodiment 15. The apparatus of embodiment 14, wherein the apparatus is further caused to:

determine one or more weather parameters associated with the incident location, the geographic area, or a combination thereof,
wherein a direction, a size, or a combination thereof of the polygon is determined based on the one or more weather parameters.

Exemplary embodiment 16. The apparatus of embodiment 15, wherein the one or more weather parameters include a wind direction, a wind speed, or a combination thereof.

Exemplary embodiment 17. A non-transitory computer-readable storage medium carrying one or more sequences of one or more instructions which, when executed by one or more processors, cause an apparatus to perform:

determining an incident location of an incident, wherein the incident disperses over a geographic area;
generating a polygon representing the geographic area, wherein the incident location is represented as one vertex of the polygon; and
computing a navigation route to or from the incident location, the geographic area, a vicinity of the geographic area, or a combination thereof based on a routing engine cost function, wherein the routing engine cost function weighs a traversal through the geographic area represented by the polygon to generate the navigation route.

Exemplary embodiment 18. The non-transitory computer-readable storage medium of embodiment 17, wherein the apparatus is further caused to perform: determining one or more map features of a geographic database that overlap with the polygon, wherein the routing engine cost function increases or decreases a traversal cost associated with the one or more map features to weigh the traversal through the geographic area represented by the polygon.

Exemplary embodiment 19. The non-transitory computer-readable storage medium of embodiment 17, wherein the incident is an airborne hazard dispersion incident.

Exemplary embodiment 20. The non-transitory computer-readable storage medium of embodiment 19, wherein the apparatus is further caused to perform:

determining one or more weather parameters associated with the incident location, the geographic area, or a combination thereof, wherein a direction, a size, or a combination thereof of the polygon is determined based on the one or more weather parameters, and wherein the one or more weather parameters include a wind direction, a wind speed, or a combination thereof.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

**Claims**

1. A method comprising:

determining an incident location of an incident, wherein the incident disperses over a geographic area;
generating a polygon representing the geographic area, wherein the incident location is represented as one vertex of the polygon; and
computing a navigation route to or from the incident location, the geographic area, a vicinity of the geographic area, or a combination thereof based on a routing engine cost function, wherein the routing engine cost function weighs a traversal through the geographic area represented by the polygon to generate the navigation route.

2. The method of claim 1, further comprising:

determining one or more map features of a geographic database that overlap with the polygon,
wherein the routing engine cost function increases or decreases a traversal cost associated with the one or more map features to weigh the traversal through the geographic area represented by the polygon.

3. The method of any of claims 1 to 2, wherein the incident is an airborne hazard dispersion incident.

4. The method of claim 3, further comprising:

determining one or more weather parameters associated with the incident location, the geographic area, or a combination thereof, wherein a direction, a size, or a combination thereof of the polygon is determined based on the one or more weather parameters.

5. The method of claim 4, wherein the one or more weather parameters include a wind direction, a wind speed, or a combination thereof.

6. The method of any of claims 3 to 5, further comprising:

determining one or more changes to the one or more weather parameters over a duration of the incident; and
dynamically updating the polygon based on the one or more changes.

7. The method of any of claims 1 to 6, further comprising:
determining a size of the polygon based on an intensity of the incident.

8. The method of any of claims 1 to 7, further comprising:

    determining a gradient component of the polygon,
    wherein the gradient component represents an intensity gradient of the incident with respect to proximity to the incident location.

9. The method of claim 8, wherein the routing engine cost function further weights the traversal through the geographic area represented by the polygon based on the gradient component.

10. The method of any of claims 1 to 9, further comprising:

    generating a map user interface depicting a representation of the polygon, the navigation route, or a combination thereof; and
    presenting the map user interface on a device.

11. The method of any of claims 1 to 10, wherein the polygon is a triangle, an oval, a logarithmic horn, or a combination thereof.

12. An apparatus comprising means configured for performing the method of any of claims 1 to 11.

13. An apparatus according to claim 12, wherein the means comprise at least one processor; and at least one memory including computer program code for one or more programs, the at least one memory and the computer program code configured to, with the at least one processor, cause the apparatus to perform the method of any of claims 1 to 11.

14. A non-transitory computer-readable storage medium carrying one or more sequences of one or more instructions which, when executed by one or more processors, cause an apparatus to perform the method of any of claims 1 to 11.

FIG. 1

# FIG. 2A

201

203

207

209

102

211

213

215

207

211

213

22

EP 4 148 391 A1

□ = VEHICLES 205

▨ = OBJECT PROJECTION PORTION 213

FIG. 2B

220

225

227

221

223

229

# FIG. 2C

<u>230</u>

| Map features 231 (elevation, slopes, forests, lakes, rivers in the vicinity) | Hazardous substance features 233 (smoke from wood, oil, chorine, natural gas, chemicals) | Map object features 235 (object type (e.g., vehicles, building, overpasses, etc.), object characteristics (e.g., dimensions, make, model) | Weather event features 237 (event type (e.g., snow, rain, ice, etc.), road weather parameters ) | Environment al features 239 (events, traffic) | Incident disbursement difference 241 (e.g., road weather parameter difference) | Routing parameter differences 243 (for vehicles, passengers, etc.) |
|---|---|---|---|---|---|---|
| $mf^1$ | $hf^1$ | $of^1$ | $wf^1$ | $ef^1$ | ΔWIND | capacity reduction |
| $mf^2$ | $hf^2$ | $of^2$ | $wf^2$ | $ef^2$ | ΔBUILDING | road closures |
| $mf^3$ | $hf^3$ | $of^3$ | $wf^3$ | $ef^3$ | ΔRAIN | access restrictions |
| $mf^4$ | $hf^4$ | $of^4$ | $wf^4$ | $ef^4$ | ... | ... |
| | | | | | | |
| | | | | | | |

EP 4 148 391 A1

FIG. 3

MAPPING PLATFORM 107

| DATA PROCESSING MODULE 301 | POLYGON MODULE 303 |

ROUTING ENGINE 305 | OUTPUT MODULE 307 |

MACHINE LEARNING SYSTEM 113

GEOGRAPHIC DATABASE 111

# FIG. 4

400

401 → **DETERMINE A LOCATION OF AN INCIDENT DISPERSING OVER A GEOGRAPHIC AREA**

403 → **GENERATE A POLYGON REPRESENTING THE GEOGRAPHIC AREA, WHILE ONE VERTEX OF THE POLYGON REPRESENTING THE LOCATION**

405 → **COMPUTE A NAVIGATION ROUTE TO OR FROM THE LOCATION, THE GEOGRAPHIC AREA, AND/OR A VICINITY OF THE GEOGRAPHIC AREA BASED ON A ROUTING ENGINE COST FUNCTION WEIGHING A TRAVERSAL THROUGH THE GEOGRAPHIC AREA**

FIG. 5A

EP 4 148 391 A1

# FIG. 5B

CONFIRM A DISPERSING INCIDENT ON A ROAD LINK?

YES    NO

EP 4 148 391 A1

FIG. 6

GEOGRAPHIC DATABASE 111

GEOGRAPHIC DATA 601

NODE DATA RECORDS 603

ROAD SEGMENT DATA RECORDS 605

POI DATA RECORDS 607

DISPERSING INCIDENT DATA RECORDS 609

MAPPING DATA RECORDS 611

INDEXES 613

EP 4 148 391 A1

FIG. 7

780 LOCAL NETWORK

784 INTERNET SERVICE PROVIDER

790 INTERNET

782 HOST

778 NETWORK LINK

792 SERVER

700

770 COMMUNICATION INTERFACE

710 BUS

708 STORAGE DEVICE

704 MEMORY

702 PROCESSOR

720 APPLICATION SPECIFIC IC (ASIC)

706 READ ONLY MEMORY

716 POINTING DEVICE

712 INPUT DEVICE

714 DISPLAY

# FIG. 8

800

```
┌─────────────────┐   ┌─────────────────┐   ┌─────────────────┐
│   PROCESSOR     │   │                 │   │                 │
│      803        │   │    DSP 807      │   │    ASIC 809     │
│                 │   │                 │   │                 │
└────────┬────────┘   └────────┬────────┘   └────────┬────────┘
         ↕                     ↕                     ↕
┌────────────────────────────────────────────────────────────┐
│                        BUS 801                              │
└────────────────────────────┬───────────────────────────────┘
                             ↕
                  ┌────────────────────────┐
                  │                        │
                  │     MEMORY 805         │
                  │                        │
                  └────────────────────────┘
```

FIG. 9

MOBILE TERMINAL 901

- 917
- 935
- 921 Duplexer
- 937 LNA
- 919 PA
- 933 Synthesizer
- 939 Down-Converter
- 931 Up-Converter
- 941 Demodulator
- 929 RF Interface
- 927 Modulator
- 915
- 925 Equalizer
- 920 Battery Interface & Power Control
- 905 DSP
- 903 MCU
- ASIC BACKPLANE
- 947 Keyboard
- 907 Display
- 949 SIM Card
- 909 AUDIO INTERFACE
- 913 CODEC
- 943 DAC
- 923 ADC
- 945
- 911
- 951 MEMORY

**EP 4 148 391 A1**

Europäisches Patentamt
European Patent Office
Office européen des brevets

# EUROPEAN SEARCH REPORT

Application Number

EP 22 19 4561

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 8 937 546 B1 (BARON SR ROBERT O [US] ET AL) 20 January 2015 (2015-01-20) <br> * column 8, line 13 – line 60; figure 5 * <br> ----- | 1-14 | INV. <br> G01C21/34 <br> G01W1/00 |
| Y | US 2007/239354 A1 (KWON JIN-PYO [KR]) 11 October 2007 (2007-10-11) <br> * paragraph [0034] – paragraph [0039]; figure 2 * <br> ----- | 1-14 | |
| A | CN 111 829 539 A (GUANGZHOU LINKCM TECH CO LTD) 27 October 2020 (2020-10-27) <br> * the whole document * <br> ----- | 1-14 | |
| A | US 2020/182639 A1 (HO JUSTIN [US] ET AL) 11 June 2020 (2020-06-11) <br> * the whole document * <br> ----- | 1-14 | |
| A | WANG ZHIYONG ET AL: "A data model for route planning in the case of forest fires", <br> COMPUTERS & GEOSCIENCES, PERGAMON, AMSTERDAM, NL, <br> vol. 68, 22 March 2014 (2014-03-22), pages 1-10, XP029021079, <br> ISSN: 0098-3004, DOI: 10.1016/J.CAGEO.2014.03.013 <br> * the whole document * <br> ----- | 1-14 | TECHNICAL FIELDS SEARCHED (IPC) <br> G01C <br> G01W |

The present search report has been drawn up for all claims

| Place of search | Date of completion of the search | Examiner |
|---|---|---|
| The Hague | 20 January 2023 | Chapple, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 4561

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2023

| Patent document cited in search report | | Publication date | Patent family member(s) | | Publication date |
|---|---|---|---|---|---|
| US 8937546 | B1 | 20-01-2015 | US 8427308 B1 | | 23-04-2013 |
| | | | US 8937546 B1 | | 20-01-2015 |
| | | | US 2011128144 A1 | | 02-06-2011 |
| US 2007239354 | A1 | 11-10-2007 | KR 20070099726 A | | 10-10-2007 |
| | | | US 2007239354 A1 | | 11-10-2007 |
| CN 111829539 | A | 27-10-2020 | NONE | | |
| US 2020182639 | A1 | 11-06-2020 | CN 111247540 A | | 05-06-2020 |
| | | | EP 3698299 A1 | | 26-08-2020 |
| | | | US 2019120640 A1 | | 25-04-2019 |
| | | | US 2020041296 A1 | | 06-02-2020 |
| | | | US 2020080856 A1 | | 12-03-2020 |
| | | | US 2020182639 A1 | | 11-06-2020 |
| | | | US 2020182640 A1 | | 11-06-2020 |
| | | | US 2022390244 A1 | | 08-12-2022 |
| | | | WO 2019079738 A1 | | 25-04-2019 |

EPO FORM P0459

For more details about this annex : see Official Journal of the European Patent Office, No. 12/82